(19) Europäisches Patentamt
European Patent Office
Office européen des brevets

(11) Veröffentlichungsnummer: **0 511 539 A1**

(12) **EUROPÄISCHE PATENTANMELDUNG**

(21) Anmeldenummer: **92106381.4**

(51) Int. Cl.[5]: **C08F 220/24**, C14C 11/00

(22) Anmeldetag: **14.04.92**

(30) Priorität: **27.04.91 DE 4113894**

(43) Veröffentlichungstag der Anmeldung: **04.11.92 Patentblatt 92/45**

(84) Benannte Vertragsstaaten: **DE FR GB IT**

(71) Anmelder: **BAYER AG**

**W-5090 Leverkusen 1 Bayerwerk(DE)**

(72) Erfinder: **Michels, Gisbert, Dr.**
**Andreas-Gryphius-Strasse 9**
**W-5000 Köln 80(DE)**
Erfinder: **Hassel, Tillmann, Dr.**
**Morgengraben 14**
**W-5000 Köln 80(DE)**

(54) **Wässrige Dispersionen von Perfluoralkylgruppen enthaltenden Copolymerisaten, ihre Herstellung und Verwendung.**

(57) Wäßrige Dispersionen mit einem Gehalt an Copolymerisaten aus Perfluoralkylgruppen enthaltenden Monomeren, Esterverbindungen und Dispergiermitteln sind gekennzeichnet durch Copolymerisate aus Comonomeren der Formeln

$C_nF_{2n+1}$-X-O-CO-$CR^1=CH_2$ (I),

$CH_2=CR^4$-CO-$OR^5$ (II),

$CH_2=CR^4$-CO-$OR^6$ (IIIa),

$CH_2=CR^4$-CO-$NHR^7$ (IIIb),

und/oder

$CH_2=CR^4$-$R^8$ (IIIc).

Solche Dispersionen sind geeignet zur Ausrüstung von Textilien, Teppichen, Papier und Leder.

EP 0 511 539 A1

Die Erfindung betrifft wäßrige Dispersionen von Copolymerisaten aus ethylenisch ungesättigten Monomeren, die Perfluoralkylgruppen mit mindestens 4 C-Atomen enthalten und von Perfluoralkylgruppen freien ethylenisch ungesättigten Monomeren. Die Dispersionen enthalten zusätzlich Esterverbindungen, die mindestens 12 linear miteinander verknüpfte C-Atome enthalten. Hierbei werden spezielle Mengenverhältnisse zwischen den Perfluoralkylgruppen enthaltenden und den von Perfluoralkylgruppen freien Monomeren eingehalten.

In der DE-Patentanmeldung P 3 935 859 werden wäßrige Dispersionen von Copolymerisaten aus ethylenisch ungesättigten und Perfluoralkylgruppen enthaltenden Monomeren mit Monomeren, die frei sind von Perfluoralkylgruppen, beschrieben; solche Dispersionen enthalten zusätzlich Esterverbindungen mit mindestens 6 linear miteinander verknüpften C-Atomen. Diese Dispersionen werden als geeignet zur Ausrüstung von Textilien, Leder und dergleichen beschrieben, wobei gute Oleophob- und Hydrophobeffekte erzielt werden. Bei der Anwendung dieser Dispersionen zeigten sich auch die beschriebenen guten Effekte bei Textilmaterialien, beispielsweise Teppichen, jedoch läßt das Eigenschaftsbild bei der Ausrüstung von Leder noch viele Wünsche offen.

In EP 368 338 werden Kompositionen mit öl- und wasserabweisenden Eigenschaften beschrieben, die Fluoralkylgruppen enthaltende Verbindungen, Glycerin und Ester bzw. Ether des Glycerins enthalten, wobei die Glycerinester durch Veresterung einer $\alpha$-Hydroxylgruppe des Glycerins mit einer $C_1$-$C_6$-Monoalkansäure hergestellt werden. Der hohe Fluorgehalt dieser Dispersionen bringt bei der Behandlung von Textilien und Leder Nachteile mit sich, die sich in Verhärtungen und Verklebungen des ausgerüsteten Substrats zeigen; dies wird sich negativ auf den Griff diese ausgerüsteten Substrate aus.

Es bestand daher der Wunsch nach Verbesserungen der Dispersionen, insbesondere für die Lederbehandlung. Insbesondere sollten hierbei die Oleophob- und Hydrophobeigenschaften besser auf den Bedarf bei der Anwendung dieser Substrate abgestellt werden.

Es zeigt sich nun überraschend, daß die erfindungsgemäßen Dispersionen trotz eines niedrigeren Fluorgehaltes gute Werte der Oleophobie und der Hydrophobie bei mit erfindungsgemäßen Dispersionen ausgerüstetem Leder ergeben.

Die Erfindung betrifft wäßrige Dispersionen mit 5-50 Gew.-%, bevorzugt 10-40 Gew.-%, bezogen auf das Gesamtgewicht der Dispersionen, an von Wasser verschiedenen Inhaltsstoffen (Feststoffgehalt), wobei die Inhaltsstoffe die Bestandteile

A. Copolymerisate aus Fluoralkylgruppen enthaltenden Monomeren und keine Fluoralkylgruppen enthaltenden Monomeren;

B. Esterverbindungen mit mindestens 12 linear miteinander verknüpften C-Atomen; und

C. Dispergiermittel

umfassen und wobei pro 100 Gew.-Teile der Copolymerisate, gerechnet als Gewicht der eingesetzten Comonomeren, 20-55 Gew.-Teile, bevorzugt 30-50 Gew.-Teile Esterverbindungen und weiterhin 1-10 Gew.-%, bevorzugt 2-8 Gew.-% an Dispergiermittel, bezogen auf das Gesamtgewicht an Copolymerisaten und Esterverbindungen, eingesetzt werden, die dadurch gekennzeichnet sind, daß die Copolymerisate Comonomere in den folgenden Gewichtsprozenten enthalten:

a) 30-54 % Perfluoralkylgruppen enthaltende (Meth)Acrylate der Formel

$$C_nF_{2n+1}\text{-X-O-CO-CR}^1=CH_2 \qquad \text{(I)},$$

in der

- n eine Zahl von 4-12, bevorzugt 6-12 darstellt,
- $R^1$ Wasserstoff oder Methyl bedeutet und
- X für $-(CH_2)_m$, $-SO_2\text{-NR}^2\text{-CH}_2\text{-CHR}^3$- oder $-O-(CH_2)_m$ steht, wobei m eine Zahl von 1-4 bedeutet, $R^2$ für $C_1$-$C_4$-Alkyl und $R_3$ für Wasserstoff oder Methyl stehen,

b) 36-60 % Monomere der Formel

$$CH_2=CR^4\text{-CO-OR}^5 \qquad \text{(II)},$$

in der

- $R^4$ Wasserstoff, Methyl oder Fluor bedeutet und
- $R^5$ für einen $C_8$-$C_{22}$-Alkylrest steht und

c) 10-34 % Monomere der Formeln

$$CH_2=CR^4\text{-CO-OR}^6 \qquad \text{(IIIa) oder}$$

$CH_2 = CR^4\text{-CO-NHR}^7$ (IIIb) oder

$CH_2 = CR^4\text{-}R^8$ (IIIc),

in denen

$R^4$ die obige Bedeutung hat,

$R^6$ für $C_1$-$C_7$-Alkyl steht,

$R^7$ für $C_1$-$C_6$-Alkyl,

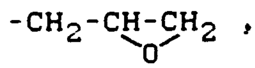

$-CH_2-OH$, $-CH_2-OCH_3$ oder $-CH_2-O-CO-CH_3$ steht und

$R^8$ Chlor, Fluor, $OR^1$, Phenyl, $-O-CO-R^1$ oder CN bedeutet oder ein Gemisch mehrerer hiervon.

Die Perfluoralkylgruppen enthaltenden Comonomeren sind durch die Formel (I) gekennzeichnet.

Geeignete von Perfluoralkylgruppen freie Comonomere sind sowohl Verbindungen der allgemeinen Formel (II) und andererseits solche der Formeln (IIIa), (IIIb) oder (IIIc). Es können auch Gemische mehrerer Monomere der Formeln (IIIa-c) eingesetzt werden.

Von den Comonomeren der Formel (II) werden bevorzugt solche eingesetzt, in denen $R^5$ die Bedeutung $C_{12}$-$C_{22}$-Alkyl annimmt. Beispiele für solche Comonomeren sind Acryl- und Methacrylsäureester von Behenylalkohol, Stearylalkohol, Oleylalkohol, Nonyl- oder Octylalkohol oder Isomerengemische solcher Alkohole.

Unter den Comonomeren der Formeln (IIIa-c) sind besonders bevorzugt:
Vinylester, wie Vinylacetat oder Vinylpropionat, sowie Acryl- und Methacrylsäureester von $C_1$-$C_4$-Alkoholen.

Die erfindungsgemäßen Dispersionen sind insbesondere gekennzeichnet durch die Gewichtsprozente der Comonomeren in den Copolymerisaten. Erfindungsgemäß liegen vor:
30-54 % Comonomere dar Formel (I), 36-60 % Comonomere der Formel (II) und 10-34 % Comonomere der Formeln (IIIa-c) oder ein Gemisch mehrerer hiervon. In bevorzugter Weise liegen folgende Gewichtsprozente der Comonomeren in den Copolymerisaten vor: 35-49 % der Formel (I), 36-50 % der Formel (II) und 15-29 % der Formeln (IIIa-c) oder ein Gemisch mehrerer hiervon.

Als Esterverbindungen mit mindestens 12 linear miteinander verknüpften C-Atomen kommen in Frage:

1) Synthetische oder natürliche Ester und/oder Partialester von gesättigten, ungesättigten und/oder substituierten Fettsäuren der Kettenlänge $C_{12}$-$C_{22}$ mit Mono-, Di-, Tri- und Polyolen. Bevorzugte Fettsäuren in solchen Estern sind: Ölsäure, Stearinsäure, Isostearinsäure, Arachinsäure, Behensäure, Palmitinsäure, Myristinsäure, Linolsäure, Linolensäure, Laurinsäure, Eleostearinsäure sowie Fettsäuren, wie sie aus Naturprodukten (auch als Gemische) gewonnen werden. Als Monohydroxykomponente zur Herstellung solcher Esterverbindungen werden Alkanole mit 1-22 C-Atomen, wie Methanol, Ethanol, Propanol, Stearylalkohol und Oleylalkohol eingesetzt. Für den Fall des Einsatzes von Diolen in solchen Estern enthalten solche zweiwertige Alkohole 4-12 C-Atome; es handelt sich beispielsweise um 1,4-Butandiol, 1,5-Pentandiol, 1,6-Hexandiol, 1,12-Dodecandiol oder Neopentylglykol. Zu den Trihydroxyverbindungen als alkoholischer Komponente in solchen Estern zählen unter anderem Glycerin, Trimethylolpropan und Cyclohexantriol. Einsetzbare Polyole sind beispielsweise Pentaerythrit, Sorbit und Mannit sowie Monosaccharide, wie Glucose oder Fructose und Oligosaccharide, wie Saccharose, Maltose, Lactose und Raffinose. Geeignete natürliche Ester sind: Rindertalg, Walöl, Rinderklauenöl, Palmöl, Olivenöl, Erdnußöl, Maisöl, Leinöl, Rapsöl, Sojabohnenöl, Sonnenblumenöl, Kokosnußöl, Palmkernöl, Rizinusöl und Babassuöl. Bevorzugte Ester sind solche mit Glycerin als alkoholischer Komponente, besonders bevorzugt sind Glycerinmono-, di- und trioleate.

2) Ester und/oder Partialester von Di-, Tri- und Tetracarbonsäuren mit gesättigten oder ungesättigten Fettalkoholen der Kettenlänge $C_{12}$-$C_{22}$. Hierfür in Frage kommende Carbonsäuren sind beispielsweise: Dicarbonsäuren mit 4-10 C-Atomen, wie Sebacinsäure, Phthalsäure, Isophthalsäure; Tricarbonsäuren wie Zitronensäure, Trimellithsäure; Tetracarbonsäuren, wie Pyromellithsäure.

3) Polyester auf Basis von mehrwertigen Alkoholen und mehrbasischen Carbonsäuren mit Molekulargewichten von 1000-8000, wobei auch bei solchen Polyestern entweder die Säurekomponente oder die alkoholische Komponente mindestens 12 C-Atome, die linear miteinander verknüpft sind, enthalten.

Die unter 1) bis 3) beschriebenen Ester können vorteilhaft auch als Gemische eingesetzt werden. Alle diese in den erfindungsgemäßen Dispersionen einsetzbaren Esterverbindungen sind dem Fachmann bekannt. Bei der Herstellung der erfindungsgemäßen Dispersionen können diese Esterverbindungen direkt oder in Form ihrer wäßrigen Emulsionen eingesetzt werden.

Die wäßrigen Dispersionen gemäß Erfindung enthalten die genannten Esterverbindungen in einer Menge von 20 bis 55 Gew.-Teilen, bevorzugt 30 bis 50 Gew.-Teilen, bezogen auf 100 Gew.-Teilen der Copolymerisate, gerechnet als Gewicht der eingesetzten Comonomeren.

Als Dispergiermittel (Emulgiermittel) kann man sowohl nichtionische, als auch anionische oder kationische Typen und ebenso Gemische aus anionischen und nichtionischen bzw. kationischen und nichtionischen grenzflächenaktiven Verbindungen einsetzen. Diese Dispergiermittel liegen in einer Menge vor, die 1-10 Gew.-%, bevorzugt 2-8 Gew.-%, beträgt, bezogen auf die Gesamtmenge an Copolymerisaten und Esterverbindungen.

Für den Fall, daß die oben genannten Esterverbindungen polymerisationsfähige Verbindungen enthalten, können diese Esterverbindungen auch in die Copolymerisate eingebaut werden.

Die erfindungsgemäßen wäßrigen Dispersionen können weitere Polymere, wie hydrophobe Vinylpolymere (DE-OS 3 407 361; DE-OS 3 407 362) und/oder Polykondensate (DE-PS 956 990) enthalten. Hierfür kommen Mengen von 8-30 Gew.-Teile, bezogen auf 100 Gew.-Teile des oben beschriebenen Copolymerisats in Frage. Geeignete Vinylpolymere sind beispielsweise Copolymere aus (Meth)Acrylaten wie Isobutylmethacrylat oder Butylacrylat, die mindestens ein Comonomer mit hydrophobem Alkylrest enthalten, wie Stearylmethacrylat. Geeignete Polykondensate sind beispielsweise Harnstoffharze sowie Melaminharze, wie sie beispielsweise durch Umsetzung von Hexamethylolmelamin-pentamethylether mit Fettsäuren und gegebenenfalls mit Methyldialkanolaminen erhalten werden können (EP 324 354). Solche Melaminkondensate können weiterhin in Kombination mit Paraffinfraktionen bzw. Paraffinwachsen eingesetzt werden.

Die Erfindung betrifft weiterhin ein Verfahren zur Herstellung der oben beschriebenen wäßrigen Dispersionen, das dadurch gekennzeichnet ist, daß aus dem Dispergiermittel und der Esterverbindung in Wasser eine Hilfsdispersion hergestellt wird, in die die Comonomeren der Formeln (I), (II), und (IIIa), (IIIb), (IIIc) oder ein Gemisch mehrerer von ihnen eindispergiert und radikalisch im Sinne der Emulsionspolymerisation polymerisiert werden.

Die Herstellung der Emulsionen erfolgt in Rühraggregaten, Ultraschallapparaturen, Homogenisatoren oder Strahldispergatoren.

Die Polymerisation wird durch Radikalbildner ausgelöst. Als Radikalbildner sind beispielsweise aliphatische Azoverbindungen, wie Azodiisobutyronitril, sowie organische oder anorganische Peroxide geeignet, die in üblichen Mengen eingesetzt werden. Als organische Peroxide seien genannt: Diacylperoxide, wie Dibenzoyl-Peroxid, Hydroperoxide, wie tert.-Butylhydroperoxid und Percarbonate, wie Dicyclohexylpercarbonat. Als anorganische Peroxide eignen sich besonders die Alkalisalze der Peroxydischwefelsäure.

Im allgemeinen betragen die Polymerisationstemperaturen 30-100°C, vorzugsweise 50-100°C.

Es ist jedoch auch möglich, durch Verwendung von Redoxsystemen die Copolymerisation bei Temperaturen von 40°C und darunter durchzuführen. Geeignete Startersysteme sind beispielsweise Mischungen aus Peroxydisulfaten und reduzierenden Schwefelverbindungen, wie Bisulfiten oder Thiosulfaten oder Kombinationen von Diacylperoxiden mit tertiären Aminen. Zur Einstellung der Molekulargewichte bzw. der Molekulargewichtsverteilungen können die bekannten Kettenüberträger auf Basis von Mercaptoverbindungen oder aliphatischen Aldehyden verwendet werden.

Zur Stabilisierung der erfindungsgemäßen Dispersionen und auch zur Herstellung der Monomeremulsionen können übliche anionen-aktive, kationen-aktive oder nichtionogene Emulgatoren sowie Kombinationen aus ionischen und nichtionischen Emulgatoren verwendet werden. Beispiele für die einsetzbaren kationischen Emulgatoren sind: quartäre Ammonium- oder Pyridiniumsalze, beispielsweise Stearyl-dimethylbenzylammoniumchlorid oder N,N,N-Trimethyl-N-perfluoroctansulfonamidopropyl-ammoniumchlorid. Beispiele für anionische Emulgatoren sind Alkylsulfonate, Alkylarylsulfonate, Fettalkoholsulfate oder Sulfobernsteinsäureester, ferner Perfluoralkylgruppen enthaltende Emulgatoren, wie Ammonium- oder Tetraethylammoniumsalze der Perfluoroctansulfonsäure oder das Kaliumsalz des N-Ethyl-N-perfluoroctansulfonylglycins. Durch nichtionische Emulgatoren wird besonders die Lagerstabilität der Copolymerisatdispersionen erhöht. Beispiele für nichtionische Emulgatoren sind Polyglykolether, beispielsweise Ethylenoxid/Propylenoxid-Copolymere, auch solche mit Blockstruktur, sowie Alkoxylierungsprodukte, insbesondere Ethoxylierungsprodukte von Fettalkoholen, Alkylphenolen, Fettsäuren, Fettsäureamiden oder Sorbitmonooleat. Dispergiermittel (Emulgatoren) der genannten Art sind dem Fachmann geläufig.

Es kann vorteilhaft sein, bei der Copolymerisation zur Herstellung der erfindungsgemäßen wäßrigen Dispersionen Hilfslösungsmittel zu verwenden, wie niedere Alkohole, niedere Glykole, niedere Ketone, niedere Amine (US 3.062.765) oder niedere Ester. Besonders günstig hat sich der Einsatz von Essigsäureethylester oder Propionsäuremethylester als Hilfslösungsmittel bewährt. Das Hilfslösungsmittel wird nach Abschluß der Polymerisation destillativ entfernt.

Die Benutzung des Hilfslösungsmittels eröffnet folgende Variante der Herstellung der erfindungsgemäßen Dispersionen: Zunächst werden Wasser und Dispergiermittel vorgelegt; dann werden die Esterverbindungen und die Comonomeren separat oder gemeinsam im Hilfslösungsmittel gelöst und in das vorgelegte Gemisch aus Wasser und Dispergiermittel eindispergiert.

Die erfindungsgemäßen Dispersionen eignen sich hervorragend zur Behandlung von natürlichem und synthetischem Leder. Daneben können sie aber auch zur Behandlung von Papier, Fasern, Filamenten, Garnen, Vliesen, Geweben, Gewirken oder Gestricken eingesetzt werden. Allen diesen Substraten verleihen sie oleophobe und hydrophobe Eigenschaften.

Selbstverständlich ist es möglich die erfindungsgemäßen Dispersionen mit anderen Dispersionen, die fluorhaltig oder fluorfrei sein können, zu verschneiden. Die verbesserten oleophobierenden und hydrophobierenden Eigenschaften, die durch die erfindungsgemäßen Dispersionen erzielt werden, sind insofern überraschend, als zu ihrer Erzielung die ausschlaggebenden fluorhaltigen Komponenten hierbei nicht erhöht werden müssen. Bereits bekannte Oleophob-/Hydrophob-Ausrüstungsmittel können dieses anwendungstechnische Niveau nur unter deutlicher Erhöhung des Anteils an perfluorhaltiger Komponente im Latex (Dispersion) erreichen. Hierbei treten jedoch die bereits beschriebenen Nachteile, wie Verhärtungen und Verklebungen, auf den damit ausgerüsteten Materialien auf, Die erfindungsgemäßen Copolymerisat-Dispersionen vermeiden diese geschilderten Nachteile.

Die Ausrüstung der genannten Substrate, insbesondere des Leders, erfolgt nach bekannten Verfahren, wie beispielsweise nach dem Auszieh- oder Foulard-Verfahren bei einer Temperatur zwischen 20 und 40$^0$C, aber auch durch Pflatschen, Besprühen oder Schaumapplikation, woran sich eine Temperaturbehandlung bei 40-180$^0$C, vorzugsweise 50-160$^0$C anschließen kann.

## Beispiele

### Beispiel A

Emulgierung von Glycerinmonooleat

In einem 2 Liter-Planschliffgefäß mit Planschliffrührer werden 240 Gewichtsteile Glycerinmonooleat (Gemisch aus ca. 50 % Monoglycerid, ca. 38 % Di- und 12 % Triglycerid) zusammen mit 7,2 Gewichtsteilen $C_{12}$-$C_{14}$-Alkyldimethylbenzylammoniumchlorid (ca. 50 %ig in Wasser) und 4,8 Gewichtsteile eines Oleylalkohol-Ethylenoxid-Addukts mit ca. 56 EO-Einheiten bei 70$^0$C 30 Minuten gerührt, so daß eine homogene Ölphase vorliegt. Das Rührwerk wird durch ein ULTRA-TURRAX-Dispergiergerät ersetzt und 1.008 Gewichtsteile entionisiertes Wasser (Temperatur: 60 bis 70$^0$C) innerhalb von 45 bis 60 Minuten zugetropft (Drehzahl des Dispergiergeräts: 10.000 RpM). Man erhält eine stabile, ca. 20 %ige wäßrige Emulsion mit Teilchengrößen von 0,1 bis 0,6 $\mu$m.

### Beispiel B

Emulgierung von Glycerintrioleat

Nach dem gleichen Verfahren, wie im Beispiel A beschrieben, wird Glycerintrioleat emulgiert.

| | | |
|---|---|---|
| Ansatz: | 240 Gew.-Teile | Glycerintrioleat |
| | 24 " | 2-Ethylhexanol-Propylenoxid-Ethylenoxid-Addukt (8 PO, 6 EO) |
| | 1.056 " | entionisiertes Wasser |

Man erhält eine stabile, ca. 20 %ige wäßrige Emulsion.

### Beispiel C

Emulgierung von Sonnenblumenöl

300 Gew.-Teile Sonnenblumenöl werden mit 28,5 Gew.-Teilen eines $C_{12}$-$C_{13}$-Alkylalkohol-Ethylenoxid-

Addukts (ca. 4 Mol EO) und 1,5 Gewichtsteilen eines Umsetzungsprodukts von Rizinusöl mit ca. 30 Mol Ethylenoxid bei 60°C 30 Minuten verrührt, so daß eine homogene Ölphase vorliegt.

In einem 2 Liter-Planschliffgefäß werden 1.200 Gewichtsteile entionisiertes Wasser von 60°C durch ein ULTRA-TURRAX-Dispergiergerät (10.000 RpM) mechanisch bewegt. Zu dieser Vorlage wird die organische Phase über einen beheizbaren Tropftrichter (60°C) innerhalb von ca. 30 Minuten zudosiert. Abschließend läßt man das Dispergiergerät weitere 5 Minuten nachlaufen.
Der Feststoffanteil in der fertigen Emulsion beträgt ca. 21,5 %.

Beispiel D

Herstellung der weiteren Polykondensate

Als weitere Polykondensate verwendbare Melaminkondensationsprodukte, wie sie z.B. in DE-A 3 800 845 bzw. in US 2 398 569 beschrieben sind, können erhalten werden, indem man z.B. Methylolprodukte von Aminotriazinen oder deren Veretherungs- und Veresterungsprodukte mit z.B. aliphatischen Carbonsäuren und mit Aminen im Rahmen einer Polykondensation umsetzt. Man kann dazu zunächst die Carbonsäure mit dem Melaminderivat umsetzen und anschließend die Aminokomponente zur Reaktion bringen (siehe DE-A 956 990). Man stellt z.B. als Pfropfgrundlage her:

1) eine Mischung aus 50 Gew.-% eines Kondensationsproduktes, hergestellt aus 1 Mol Hexamethylolmelamin-pentamethylether, 1,5 Mol Behensäure und 0,9 Mol N-Methyldiethanolamin bei 130°C während 3 Stunden und 50 Gew.-% Paraffin vom Schmelzpunkt 52°C;

2) ein Polykondensat, das man dadurch erhält, daß man 3 Mol einer technischen Fettsäure, die zu ca. 50 % aus $c_{22}$-, ca. 40 % aus $c_{20}$-, ca. 5 % aus $C_{18}$- und zu ca. 5 % aus anderen Carbonsäuren besteht, bei 80°C aufschmilzt, mit 1 Mol Hexamethoxymethylmelamin versetzt und 24 Stunden bei 160 bis 190°C umsetzt.

Beispiel 1

Man bereitet folgende Lösung bei Raumtemperatur und rührt 15 min bei 50°C.

Losung 1:

| | |
|---|---|
| 215,0 Gew.-Teile | einer nach Beispiel B bereiteten Emulsion |
| 3,0 Gew.-Teile | Benzyldodecyldimethylammoniumchlorid |
| 1,0 Gew.-Teil | Ethoxylierter Oleylalkohol mit 56 EO |
| 500 Gew.-Teile | entionisiertes Wasser |

Lösung 2 wird bei 50°C hergestellt:

Lösung 2:

| | |
|---|---|
| 300,0 Gew.-Teile | Essigsäureethylester |
| 46,0 Gew.-Teile | N-Methyl-perfluoroctansulfonamidoethylmethacrylat (Ib) |
| 36,0 Gew.-Teile | Stearylmethacrylat |
| 18,0 Gew.-Teile | Vinylacetat |
| 15,0 Gew.-Teile | Polykondensat nach Beispiel D2) |

Lösung 3 wird bei Raumtemperatur hergestellt:

Lösung 3:

| | |
|---|---|
| 1,0 Gew.-Teil | Dilaurylperoxid |
| 0,4 Gew.-Teile | tert.-Butylperpivalat |
| 1,0 Gew.-Teil | Essigsäureethylester |

Die Lösungen 1 und 2 werden bei 50°C zusammengegeben und bis zur Teilchengrößenkonstanz bei 40 bis 50°C in einer Emulgiermaschine emulgiert. Die erhaltene Emulsion gibt man in einen Reaktor, der mit Rührer, Rückflußkühler und Innenthermometer ausgestattet ist und läßt auf 30°C abkühlen. Lösung 3 wird dann bei 30°C zudosiert und 15 Minuten bei 30 bis 40°C gerührt. Anschließend wird innerhalb einer halben Stunde auf 60°C erhitzt und drei Stunden bei 60 bis 70°C gerührt. Danach läßt man drei Stunden bei 70 bis 80°C reagieren und destilliert dabei den Essigsäureethylester über eine zusätzlich angebrachte Destillationsapparatur ab. Es wird noch zwei Stunden bei 90°C nachgerührt.

| | |
|---|---|
| Feststoffgehalt: | 15,21 % |
| Fluorgehalt im Feststoff: | 15,03 % |

Beispiel 2 - 7

Die folgenden Beispiele werden in ähnlicher Weise hergestellt, jedoch mit veränderten Anteilen der Monomeren (I), (II) und (III) sowie der Esterverbindungen und der Polykondensate. Weiterhin kann die Menge an entionisiertem Wasser verändert sein, so daß kleinere oder größere Feststoffgehalte resultieren. Gleiches gilt für die eingesetzten Emulgatoren.

| | BEISPIELE | | | | | | |
|---|---|---|---|---|---|---|---|
| | 2 | 3 | 4 | 5 | 6 | 7 | Gew.-Teile |
| N-Methyl-perfluoroctan-sulfonamidoethylmethacrylat | 43,75 | 46,3 | 46,0 | 46,0 | 46,0 | 42,5 | " |
| Stearylmethacrylat | 37,5 | 37,0 | 36,0 | 36,0 | 36,0 | 41,1 | " |
| Vinylacetat | 18,75 | 16,7 | 18,0 | 18,0 | 18,0 | 16,4 | " |
| Ester nach Beispiel A | 44,8 | 39,8 | 43,0 | 40,0 | 37,0 | 37,0 | " |
| Polykondensat D2) | 15,6 | 13,9 | 15,0 | 15,0 | 15,0 | - | " |
| Feststoffgehalt | 15,8 | 16,8 | 16,5 | 16,5 | 16,1 | 29,31 | % |
| Fluorgehalt im Feststoff | 13,8 | 15,2 | 14,8 | 14,8 | 15,1 | 15,5 | % |

Vergleichsbeispiele 1 - 2:

Die Vergleichsbeispiele 1 - 2 wurden in ähnlicher Weise wie die Beispiele 1 - 7 hergestellt, jedoch mit veränderten Einsatzmengen.

| | Vergleichsbeispiele | | |
|---|---|---|---|
| | 1 | 2 | Gew.-Teile |
| N-Methyl-perfluoroctan-sulfonamidoethylmethacrylat | 59,7 | 48,1 | " |
| Stearylmethacrylat | 26,9 | 34,6 | " |
| Vinylacetat oder n-Butyl-acrylat | 13,4 | 17,3 | " |
| Ester nach Beispiel B | 32,1 | 57,7 | " |
| Polykondensat nach D2) | 11,2 | 14,4 | " |
| Feststoffgehalt | 17,6 | 17,6 | % |
| Fluorgehalt im Feststoff | 21,1 | 14,2 | % |

Vergleichsbeispiel 3:

Hier wurde wie bei den Vergleichsbeispielen 1 - 2 verfahren, aber mit dem Unterschied, daß statt des Esters nach Beispiel B (Glycerintrioleat), Glycerinmonohexanoat, emulgiert in Wasser, eingesetzt wurde.

| | |
|---|---|
| N-Methyl-perfluoroctansulfonamidoethylmethacrylat: | 46,0 Gew.-Teile |
| Stearylmethacrylat: | 36,0 Gew.-Teile |
| Vinylacetat: | 18,0 Gew.-Teile |
| Glycerinmonohexanoat: (emulgiert in Wasser) | 43,0 Gew.-Teile |
| Polykondensat nach Beisp. D2): | 15,0 Gew.-Teile |
| Feststoffgehalt: | 14,6 % |
| Fluorgehalt im Feststoff: | 14,7 % |

Beispiel 8 (Verwendung)

Die zu prüfende Dispersion wird mit Wasser auf 5 % Feststoffgehalt verdünnt. Von der verdünnten Dispersion werden 5 g auf 1/4 Quadratfuß Anilinleder aufgespritzt. Das Leder wird 5 min bei 50°C getrocknet, über Nacht liegen gelassen und dann für 5 min einer Hitzebehandlung von 70°C unterzogen. Die Testflüssigkeiten ($H_2O$ zur Prüfung der Hydrophobie und AATCC-Test Method 118-Mischungen zur Prüfung der Oleophobie) werden als Tropfen (- 0,2 ml) auf dem Leder appliziert. Die Test Method 118-Mischungen sind: Nr. 1: Nujol oder Paraffinöl DAB 8; Nr. 2: 65 Vol.-% Nujol und 35 Vol.-% n-Hexadecan (21°); Nr. 3: n-Hexadecan; Nr. 4: n-Tetradecan; Nr. 5: n-Dodecan; Nr. 6: n-Decan; Nr. 7: n-Octan; Nr. 8: n-Heptan.

| | Hydrophobie[1)] | Oleophobie[2)] |
|---|---|---|
| Beispiel 1 | verdunstet | 4/5 |
| Beispiel 2 | verdunstet | 4/5 |
| Beispiel 3 | verdunstet | 4/5 |
| Beispiel 4 | verdunstet | 5/6 |
| Beispiel 5 | verdunstet | 5/6 |
| Beispiel 6 | verdunstet | 5/6 |
| Beispiel 7 | verdunstet | 4/5 |
| Vergleichsbeispiel 1 | 1 min | 4/5 |
| Vergleichsbeispiel 2 | verdunstet | 2/3 |
| Vergleichsbeispiel 3 | < 3 min | 2/3 |

1) "Verdunstet" bedeutet, daß der applizierte Wassertropfen ohne Benetzung des Leders verdunstet. Eine Zeitangabe bedeutet, daß Benetzung innerhalb der angegebenen Zeit erfolgt.
2) Die erste Zahlenangabe gibt die Nummer der Testflüssigkeit an, bei der die Benetzung der Lederoberfläche innerhalb 30 sec erfolgt, die zweite Zahlenangabe, bei der der Tropfen nach 30 sec eben noch sichtbar ist. Hierbei geben höhere Zahlen eine bessere Oleophobierung an.

Die erfindungsgemäßen Dispersionen nach Beispielen 1 - 7 zeigen sowohl bei der Hydrophobie als auch bei der Oleophobie gleichzeitig gute bis sehr gute Werte. Demgegenüber sind die nicht erfindungsgemäßen Dispersionen nach den Vergleichsbeispielen 1 - 3 entweder in der Hydrophobie oder Oleophobie oder in beiden Eigenschaften gleichzeitig ohne Wirkung.

**Patentansprüche**

**1.** Wäßrige Dispersionen mit 5-50 Gew.-%, bevorzugt 10-40 Gew.-%, bezogen auf das Gewicht der Dispersion, an von Wasser verschiedenen Inhaltsstoffen (Feststoffen), wobei die Inhaltsstoffe die Bestandteile

A. Copolymerisate aus Perfluoralkylgruppen enthaltenden Monomeren und keine Perfluoralkylgruppen enthaltenden Monomeren;

B. Esterverbindungen mit mindestens 12 linear miteinander verknüpften C-Atomen; und

C. Dispergiermittel

umfassen und wobei pro 100 Gew.-Teile der Copolymerisate, gerechnet als Gewicht der eingesetzten Comonomeren, 20-55 Gew.-Teile, bevorzugt 30 bis 50 Gew.-Teile Esterverbindungen und weiterhin 1-10 Gew.-Teile %, bevorzugt 2-8 Gew.-Teile an Dispergiermittel, bezogen auf das Gesamtgewicht an Copolymerisaten und Esterverbindungen, eingesetzt werden, dadurch gekennzeichnet, daß die Copolymerisate Comonomere in den folgenden Gewichtsprozenten enthalten:

a) 30-54 % Perfluoralkylgruppen enthaltende (Meth)Acrylate der Formel

$$C_nF_{2n+1}\text{-X-O-CO-CR}^1=CH_2 \qquad (I),$$

in der

n eine Zahl von 4-12, bevorzugt 6-12, darstellt,

$R^1$ Wasserstoff oder Methyl bedeutet und

X für $-(CH_2)_m$, $-SO_2-NR^2-CH_2-CHR^3-$ oder $-O-(CH_2)_m$ steht, wobei m eine Zahl von 1-4 bedeutet, $R^2$ für $C_1$-$C_4$-Alkyl und $R_3$ für Wasserstoff oder Methyl stehen,

b) 36-60 % Monomere der Formel

$$CH_2=CR^4\text{-CO-OR}^5 \qquad (II),$$

in der

$R^4$ Wasserstoff, Methyl oder Fluor bedeutet und

$R^5$ für einen $C_8$-$C_{22}$-Alkylrest steht und

c) 10-34 % Monomere der Formeln

$CH_2 = CR^4\text{-CO-OR}^6$ (III) oder

$CH_2CR^4\text{-CO-NHR}^7$ (IIIb) oder

$CH_2 = CR^4\text{-R}^8$ (IIIc),

in denen

$R^4$ die obige Bedeutung hat,
$R^6$ für $C_1$-$C_7$-Alkyl steht,
$R^7$ für $C_1$-$C_6$-Alkyl,

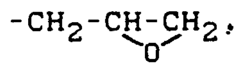

$-CH_2\text{-OH}$, $-CH_2\text{-OCH}_3$ oder $-CH_2\text{-O-CO-CH}_3$ steht und
$R^8$ Chlor, Fluor, $OR^1$, Phenyl, $-O\text{-CO-R}^1$ oder CN bedeutet

oder ein Gemisch mehrerer hiervon.

**2.** Wäßrige Dispersionen nach Anspruch 1, dadurch gekennzeichnet, daß die Copolymerisate Comonomere in den folgenden Gew.-% enthalten:
a) 35-49 % solche der Formel (I),
b) 36-50 % solche der Formel (II) und
c) 15-29 % solche der Formel (IIIa), (IIIb) und (IIIc)
oder ein Gemisch mehrerer hiervon.

**3.** Wäßrige Dispersionen nach Anspruch 1, dadurch gekennzeichnet, daß sie als Esterverbindungen
1) Synthetische oder natürliche Ester und/oder Partialester von gesättigten, ungesättigten und/oder substituierten Fettsäuren der Kettenlänge $C_{12}$-$C_{22}$ mit Mono-, Di-, Tri- und Polyolen,
2) Ester und/oder Partialester von Di-, Tri- und Tetracarbonsäuren mit gesättigten oder ungesättigten Fettalkoholen der Kettenlänge $C_{12}$-$C_{22}$ und/oder
3) Polyester auf Basis von mehrwertigen Alkoholen und mehrbasischen Carbonsäuren mit Molekulargewichten von 1000-8000
enthalten.

**4.** Wäßrige Dispersionen nach Anspruch 1, dadurch gekennzeichnet, daß die von Perfluoralkylgruppen freien Comonomere Vinylester oder Acryl/Methacrylester von $C_1$-$C_4$-Alkanolen und/oder Acryl- und Methacrylester von $C_{12}$-$C_{22}$-Alkanolen sind.

**5.** Verfahren zur Herstellung der wäßrigen Dispersionen nach Anspruch 1, dadurch gekennzeichnet, daß aus dem Dispergiermittel und der Esterverbindung in Wasser eine Hilfsdispersion hergstellt wird, in die die Comonomeren der Formeln (I), (II), (IIIa), (IIIb) und (IIIc) oder ein Gemisch mehrerer von ihnen eindispergiert und radikalisch im Sinne der Emulsionspolymerisation polymerisiert werden.

**6.** Verfahren nach Anspruch 5, dadurch gekennzeichnet, daß in Gegenwart eines niederen Alkohols, eines Glykols, eines Ketons, eines Amins oder eines niederen Esters als Hilfslösungsmittel gearbeitet wird und das Hilfslösungsmittel nach Abschluß der Polymerisation abdestilliert wird.

**7.** Verfahren nach Anspruch 6, dadurch gekennzeichnet, daß als Hilfslösungsmittel Essigsäureethylester oder Propionsäuremethylester eingesetzt wird.

**8.** Verwendung der wäßrigen Dispersionen nach Anspruch 1 zur Ausrüstung von Leder.

**9.** Verwendung nach Anspruch 8, dadurch gekennzeichnet, daß Kombinationen der Dispersionen gemäß Anspruch 1 mit bereits bekannten, ebenfalls fluorhaltigen Polymerisat-Dispersionen eingesetzt werden.

Europäisches Patentamt

# EUROPÄISCHER RECHERCHENBERICHT

Nummer der Anmeldung

EP 92 10 6381

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,P,X | EP-A-0 424 765 (BAYER)<br>* das ganze Dokument *<br>& DE-A-3 935 859 | 1-9 | C08F220/24<br>C14C11/00 |
| D,A | EP-A-0 368 338 (DAIKIN INDUSTRIES)<br>* Ansprüche 1-4 * | 1-5 | |
| A | EP-A-0 294 648 (DAIKIN INDUSTRIES) | 1-4,8,9 | |

RECHERCHIERTE SACHGEBIETE (Int. Cl.5)

C08F
C14C
D06M

Der vorliegende Recherchenbericht wurde für alle Patentansprüche erstellt

| Recherchenort | Abschlußdatum der Recherche | Prüfer |
|---|---|---|
| DEN HAAG | 28 AUGUST 1992 | ANDRIOLLO G.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)